# EUROPÄISCHE PATENTANMELDUNG

(11) **EP 4 497 572 A1**
(43) Veröffentlichungstag der Anmeldung: **29.01.2025**
(21) Anmeldenummer: 23187515.4
(22) Anmeldetag: 25.07.2023
(51) Int. Cl.: B29C 64/124, B29C 64/232, B29C 64/255, B33Y 10/00, B33Y 30/00

(54) **VERFAHREN ZUM SCHICHTWEISEN HERSTELLEN EINES OBJEKTS**

(71) Anmelder: Ivoclar Vivadent AG, 9494 Schaan (LI)
(72) Erfinder: Beck, Gregor, 9494 Schaan (LI); Walder, Jöri, 7213 Valzeina (CH); Ebert, Jörg, 9470 Buchs (CH)
(74) Vertreter: Baldus, Oliver

(57) **Zusammenfassung**

Die vorliegende Erfindung betrifft ein Verfahren zum schichtweisen Herstellen eines Objekts, mit den Schritten eines Aushärtens (S101) einer Schicht des Objekts auf einem elastisch verformbaren Boden einer Wanne, die ein lichthärtbares Material umfasst; und eines Abziehens (S102) der ausgehärteten Schicht von dem elastisch verformbaren Boden.

## Beschreibung

Die vorliegende Erfindung betrifft ein Verfahren zum schichtweisen Herstellen eines Objekts und ein Herstellungsgerät zum schichtweisen Herstellen eines Objekts.

Beim schichtweisen Drucken eines dreidimensionalen Objektes mit einem Stereolithographie- oder Laser-Drucker wird das zu druckende Objekt nach jeder belichteten Schicht von einer Referenzebene, wie beispielsweise einer Folie, am Boden einer Wanne mit lichthärtbarem Material abgelöst, damit neues Material für die nächste zu belichtende Schicht unter das bereits gedruckte Teilobjekt fließen kann.

Die belichtete Schicht verbindet sich beim Belichten mit dem Boden und kann beim Abziehen Stücke aus einer silikonbeschichteten Folie am Boden herausreißen oder die Folie zum Reißen bringen. Beim Abziehen kann sich die Folie nicht deformieren oder aufwölben. Dies hat hohe Abzugskräfte zur Folge und das zu druckende Objekt wird abgerissen. Die elastische Deformation oder Aufwölbung der Folie wird beispielsweise verhindert, weil die Folie auf einer durchsichtigen Platte aufliegt und beim Abziehen die Luft nicht schnell genug zwischen die Folie und die Platte strömen kann. Die Folie kann auch durch eine Flüssigkeit zwischen der Folie und der Platte oder durch eine elektrostatische Aufladung an der Platte haften bleiben.

Dadurch entsteht Verschleiß am Boden, so dass die Lebensdauer der Wanne sinkt. Die auftretenden hohen Abzugskräfte können den Boden der Wanne plastisch deformieren. Dies kann dazu führen, dass die Schichtdicke an entsprechenden Stellen nicht mehr korrekt ist oder es können sogar Fehler beim Aufbau des Objektes entstehen.

Es ist die technische Aufgabe der vorliegenden Erfindung, das Lösen eines Objekts von einer Folie oder Membran zu verbessern und auftretende Abzugskräfte zu verringern.

Diese Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum schichtweisen Herstellen eines Objekts gelöst, mit den Schritten eines Aushärtens einer Schicht des Objekts auf einem elastisch verformbaren Boden einer Wanne, die ein lichthärtbares Material umfasst; und eines Abziehens der ausgehärteten Schicht von dem elastisch verformbaren Boden. Der Boden kann eine elastisch verformbare Folie oder Membran umfassen. Beim Abziehen kann der Boden vom Objekt und/oder das Objekt vom Boden wegbewegt werden. Im Allgemeinen umfasst das Abziehen jede Relativbewegung, durch die das Objekt vom elastisch verformbaren Boden abgelöst wird.

Bei diesem Ablöseprozess ist es vorteilhaft, dass sich der Boden elastisch deformieren oder wölben kann. Diese elastische Deformation oder Aufwölbung führt dazu, dass das zu druckende Objekt von der Membran abgeschält wird und die Abzugskräfte reduziert werden. Dies verringert die Belastungen auf das aufzubauende dreidimensionale Objekt und verringert das Risiko von Abrissen von der Bauplattform oder Delaminationen einzelner Schichten des aufzubauenden Objektes.

In einer technisch vorteilhaften Ausführungsform des Verfahrens verformt sich der Boden beim Abziehen der ausgehärteten Schicht elastisch. Dadurch wird beispielsweise ebenfalls der technische Vorteil erreicht, dass sich die Abziehkräfte weiter verringern.

In einer weiteren technisch vorteilhaften Ausführungsform des Verfahrens liegt der elastisch verformbare Boden während einem Aushärten der Schicht auf einer Platte auf. Dadurch wird beispielsweise der technische Vorteil erreicht, dass eine ebene und gleichmäßige Schicht erzeugt werden kann und sich der Boden nicht aufgrund der Schwerkraft durchbiegt.

In einer weiteren technisch vorteilhaften Ausführungsform des Verfahrens wird die Platte vor oder mit dem Abziehen der ausgehärteten Schicht vom elastisch verformbaren Boden räumlich von dem Boden getrennt. Dadurch wird beispielsweise der technische Vorteil erreicht, dass sich der Boden ungehindert verformen kann.

In einer weiteren technisch vorteilhaften Ausführungsform des Verfahrens wird der elastisch verformbare Boden zum Trennen der Platte einseitig und/oder zweiseitig gelöst. Dadurch wird beispielsweise der technische Vorteil erreicht, dass sich der Boden effizient von der Platte trennen lässt.

In einer weiteren technisch vorteilhaften Ausführungsform des Verfahrens wird zum Abziehen die ausgehärtete Schicht von dem elastisch verformbaren Boden wegbewegt. Dadurch wird beispielsweise der technische Vorteil erreicht, dass sich das Objekt leicht vom Boden abziehen lässt.

In einer weiteren technisch vorteilhaften Ausführungsform des Verfahrens verformt oder wölbt sich der elastisch verformbare Boden beim Abziehen. Dadurch wird beispielsweise der technische Vorteil erreicht, dass sich die Schicht gut vom Boden ablöst.

In einer weiteren technisch vorteilhaften Ausführungsform des Verfahrens wird nach dem Abziehen der elastisch verformbare Boden erneut mit der Platte in Kontakt gebracht. Dadurch wird beispielsweise der technische Vorteil erreicht, dass der Zyklus mit einer hohen Geschwindigkeit wiederholt werden kann.

In einer weiteren technisch vorteilhaften Ausführungsform des Verfahrens wird der elastisch verformbare Boden durch eine Bewegungsvorrichtung abgesenkt. Dadurch wird beispielsweise der technische Vorteil erreicht, dass der elastisch verformbare Boden wieder in Kontakt mit einer darunter liegenden Platte gebracht werden kann.

Gemäß einem zweiten Aspekt wird die technische Aufgabe durch ein Herstellungsgeräts zum schichtweisen Herstellen eines Objekts gelöst, mit einer Aushärtevorrichtung zum Aushärten einer Schicht des Objekts auf einem elastisch verformbaren Boden einer Wanne für ein lichthärtbares Material; und einer Abziehvorrichtung zum Abziehen der ausgehärteten Schicht von dem elastisch verformbaren Boden. Durch das Herstellungsgerät werden die gleichen technischen Vorteile wie durch das Verfahren nach dem ersten Aspekt erreicht.

In einer technisch vorteilhaften Ausführungsform des Herstellungsgeräts ist der elastisch verformbare Boden ausgebildet, sich beim Abziehen der ausgehärteten Schicht elastisch zu verformen. Dadurch wird beispielsweise ebenfalls der technische Vorteil erreicht, dass sich die Abziehkräfte weiter verringern.

In einer weiteren technisch vorteilhaften Ausführungsform des Herstellungsgeräts weist der elastisch verformbare Boden ein Biegemodul zwischen 200 MPa und 2000 MPa auf. Dadurch wird beispielsweise ebenfalls der technische Vorteil erreicht, dass besonders geeignete Böden verwendet werden, von denen sich das Objekt gut lösen lässt.

In einer weiteren technisch vorteilhaften Ausführungsform des Herstellungsgeräts umfasst das Herstellungsgerät eine Platte, auf die der elastische Boden auflegbar ist. Dadurch wird beispielsweise ebenfalls der technische Vorteil erreicht, dass eine ebene und gleichmäßige Schicht erzeugt werden kann und sich der Boden nicht aufgrund der Schwerkraft durchbiegt.

In einer weiteren technisch vorteilhaften Ausführungsform des Herstellungsgeräts umfasst das Herstellungsgerät eine Bewegungsvorrichtung zum einseitigen und/oder zweiseitigen Anheben und Absenken des elastisch verformbaren Bodens. Dadurch wird beispielsweise ebenfalls der technische Vorteil erreicht, dass sich der Boden effizient von der Platte trennen oder ablegen lässt.

In einer weiteren technisch vorteilhaften Ausführungsform des Herstellungsgeräts ist die Abziehvorrichtung mit einer Bauplattform zum Aufbauen des Objektes gekoppelt. Dadurch wird beispielsweise der technische Vorteil erreicht, dass sich das Objekt auf einfache Weise vom Boden trennen lässt.

Gemäß einem dritten Aspekt wird die technische Aufgabe durch ein Herstellungssystem mit einem Herstellungsgerät nach dem ersten Aspekt und einem lichthärtbaren Material gelöst, das nach dem Aushärten einer Schicht des Objekts auf dem elastisch verformbaren Boden der Wanne anhaftet. Durch das Herstellungssystem werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: ein Herstellungsgerät zum schichtweisen Herstellen eines Objekts in einem ersten Verfahrensschritt;
- Fig. 2: das Herstellungsgerät zum schichtweisen Herstellen des Objekts in einem weiteren Verfahrensschritt;
- Fig. 3: das Herstellungsgerät zum schichtweisen Herstellen des Objekts in einem weiteren Verfahrensschritt;
- Fig. 4: das Herstellungsgerät zum schichtweisen Herstellen des Objekts in einem weiteren Verfahrensschritt;
- Fig. 5: das Herstellungsgerät zum schichtweisen Herstellen des Objekts in einem weiteren Verfahrensschritt;
- Fig. 6: das Herstellungsgerät zum schichtweisen Herstellen des Objekts in einem weiteren Verfahrensschritt;
- Fig. 7: das Herstellungsgerät zum schichtweisen Herstellen des Objekts in einem weiteren Verfahrensschritt;
- Fig. 8: das Herstellungsgerät zum schichtweisen Herstellen des Objekts in einem anderen Verfahrensschritt;
- Fig. 9: das Herstellungsgerät zum schichtweisen Herstellen des Objekts in einem weiteren Verfahrensschritt;
- Fig. 10: das Herstellungsgerät zum schichtweisen Herstellen des Objekts in einem weiteren Verfahrensschritt;
- Fig. 11: das Herstellungsgerät zum schichtweisen Herstellen des Objekts in einem weiteren Verfahrensschritt;
- Fig. 12: das Herstellungsgerät zum schichtweisen Herstellen des Objekts in einem weiteren Verfahrensschritt;
- Fig. 13: das Herstellungsgerät zum schichtweisen Herstellen des Objekts in einem anderen Verfahrensschritt;
- Fig. 14: ein Blockdiagramm eines Verfahrens zum schichtweisen Herstellen des Objekts; und
- Fig. 15: einen Vergleich der Abzugskräfte mit und ohne den Hubmechanismus der Bewegungsvorrichtung.

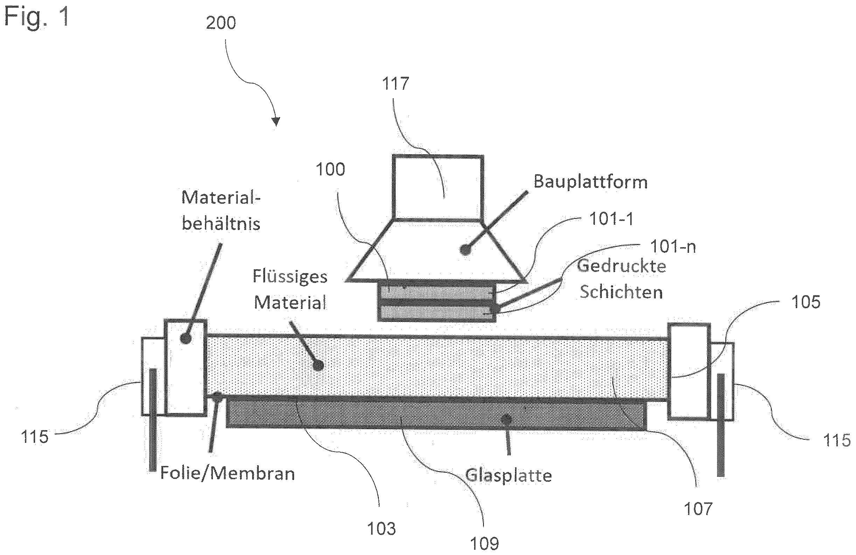

Fig. 1 zeigt ein Herstellungsgerät 200 zum schichtweisen Herstellen eines räumlichen Objekts 100 in einem ersten Verfahrensschritt. Das räumliche Objekt 100 ist beispielsweise ein Dentalobjekt, wie eine Krone, eine Brücke, ein Veneer, ein Abutment, ein Inlay, ein Onlay, eine Schiene oder eine Teil- oder Vollprothese. Im Allgemeinen kann Objekt 100 auch ein anderes Objekt sein, das im Rahmen eines Druckprozesses dreidimensional aufgebaut werden soll, wie beispielsweise ein Wachsobjekt zum Pressen oder Gießen einer Restauration, ein Modell für einen Zahntechniker, ein Try-In-Objekt, eine Bohrschablone, ein Abformlöffel, oder eine Gingiva-Maske.

Das Herstellungsgerät 200 umfasst eine Wanne 105 als Materialbehältnis, in der ein flüssiges lichthärtbares Material 107 aufgenommen ist, wie beispielsweise ein lichthärtbares Polymer, ein lichthärtbarer Zement oder ein ungefülltes oder mit Partikeln gefülltes lichthärtendes Material. Das lichthärtbare Material kann durch Belichtung verfestigt werden.

Die Wanne 105 umfasst einen transparenten und elastisch verformbaren Boden 103, der durch eine Folie oder Membran gebildet sein kann. Die Folie oder Membran kann eine semipermeable Folie oder Membran sein, die gasdurchlässig oder Sauerstoffdurchlässig ist.

Der elastisch verformbare Boden 103 ist beispielsweise aus Perfluorethylenpropylen (FEP) gebildet und weist ein Biegemodul von 500 MPa auf. Im Allgemeinen können auch andere Kunststoffe verwendet werden, wie beispielsweise Polyethylenterephthalat (PET) oder Perfluoralkoxy (PFA) mit einem Biegemodul zwischen 200 MPa und 2000 MPa. Der Boden 103 kann zudem eine Silikonschicht aufweisen, um eine weiche und schlecht-haftende Schicht an der Kontaktstelle zum Objekt 100 herzustellen. Der Boden 103 liegt trennbar auf einer horizontalen transparenten Platte 109 auf, die diesen von unten horizontal abstützt. Eine Bewegungsvorrichtung 115 kann die Wanne 105 in einer Hohe einseitig oder zweiseitig anheben oder absenken. Die Bewegungsvorrichtung 115 kann beispielsweise durch Aktoren gebildet sein, die seitlich an der Wanne 105 angreifen. Die Aktoren umfassen beispielsweise einen steuerbaren Linearmotor oder eine Hydraulikstange.

Das Objekt 100 wird durch schichtweises Aushärten des lichthärtbaren Materials 107 hergestellt. Zwei Schichten 101-1 und 101-n des Objektes 100 sind bereits aufgebaut und ausgehärtet. Die Schicht 101-1 haftet an einer beweglichen Bauplattform 117 an, die als Träger des Objektes 100 dient. Die zweite Schicht 101-n befindet sich in Kontakt mit der ersten Schicht 101-1. Das Objekt 100 ist von Boden 103 abgelöst und das flüssige Material 107 ist in der Wanne 105 unter das zu bauende Objekt 100 geflossen.

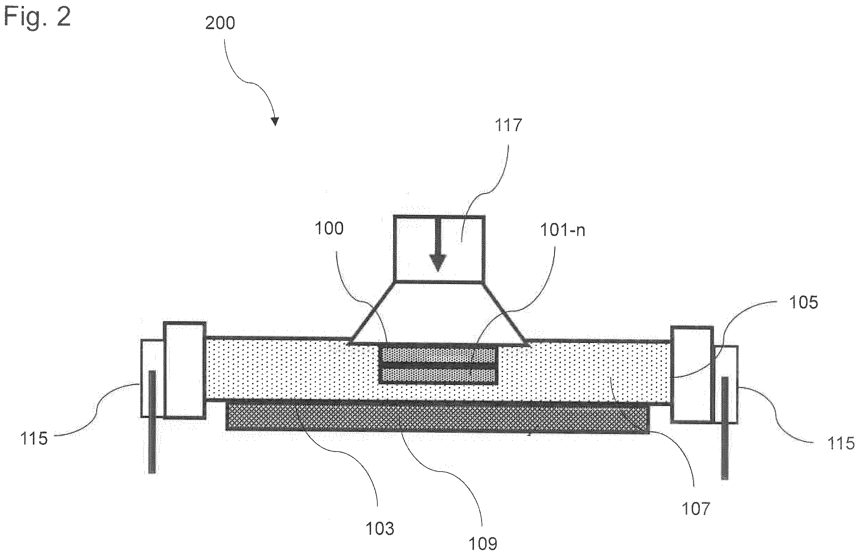

Fig. 2 zeigt das Herstellungsgerät 200 zum schichtweisen Herstellen des Objekts 100 in einem weiteren Verfahrensschritt. Die Bauplattform 117 wird nach unten in Richtung des Bodens 103 bewegt, sodass unter der letzten ausgehärteten Schicht 101-n des zu druckenden Objekts 100 ein Flüssigkeitsfilm des lichthärtbaren Materials 107 mit der Dicke der nächsten aufzubauenden Schicht 101-n+1 erzeugt wird. Die Dicke dieser Schicht beträgt beispielsweise 50 um bis 100 um. Aus diesem Flüssigkeitsfilm wird die nächste Schicht des Objekts 100 gebildet.

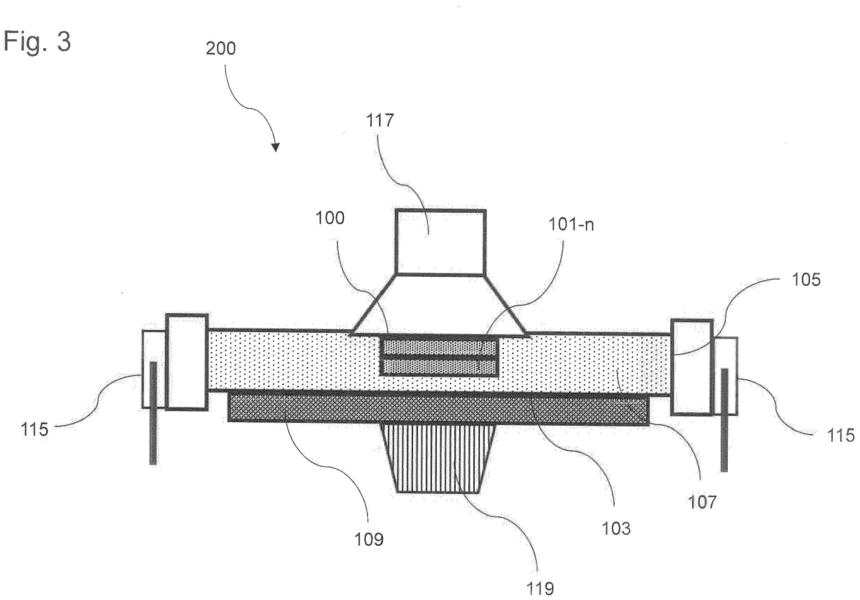

Fig. 3 zeigt das Herstellungsgerät 200 zum schichtweisen Herstellen des Objekts 100 in einem weiteren Verfahrensschritt. Die dritte Schicht 101-n+1 wird durch die transparente Platte 109 und den transparenten Boden 103 der Wanne 107 hindurch durch eine Belichtungseinrichtung 119 ausgehärtet. Die Belichtungsvorrichtung 119 umfasst beispielsweise eine digitale Mikrospiegel-Einheit, mit der ein digitales Bild auf einen Lichtstrahl aufmoduliert wird. Dadurch härtet das Material 107 lediglich an bestimmten Stellen aus, die der Form des aufzubauenden Objektes 100 entsprechen. Die Belichtungsdauer zum Aushärten der Schicht 101-n+1 beträgt beispielsweise 0.1 s - 20 s.

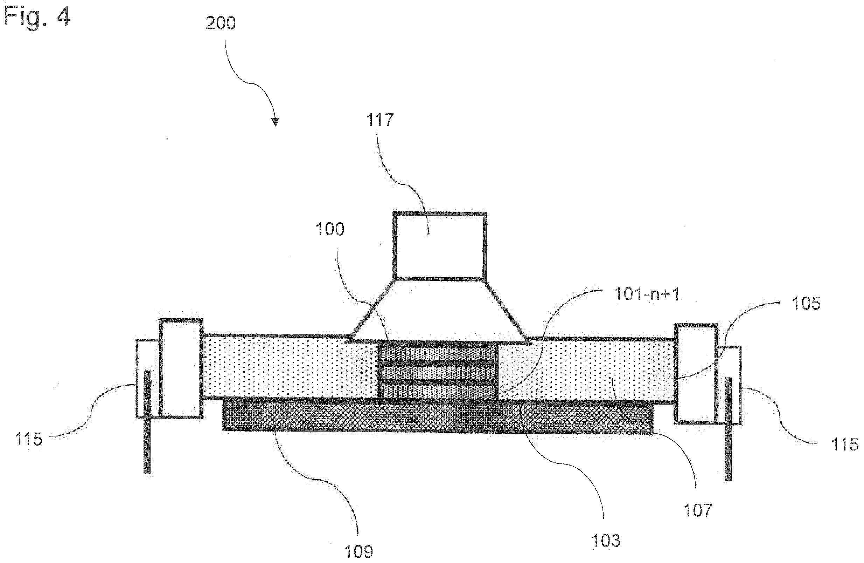

Fig. 4 zeigt das Herstellungsgerät 200 zum schichtweisen Herstellen des Objekts 100 in einem weiteren Verfahrensschritt. Nach der Belichtung ist die dritte Schicht 101-n+1 ausgehärtet und haftet oben an der Schicht 101-n des Objekts 100 und unten am elastisch verformbaren Boden 103 der Wanne 105 an.

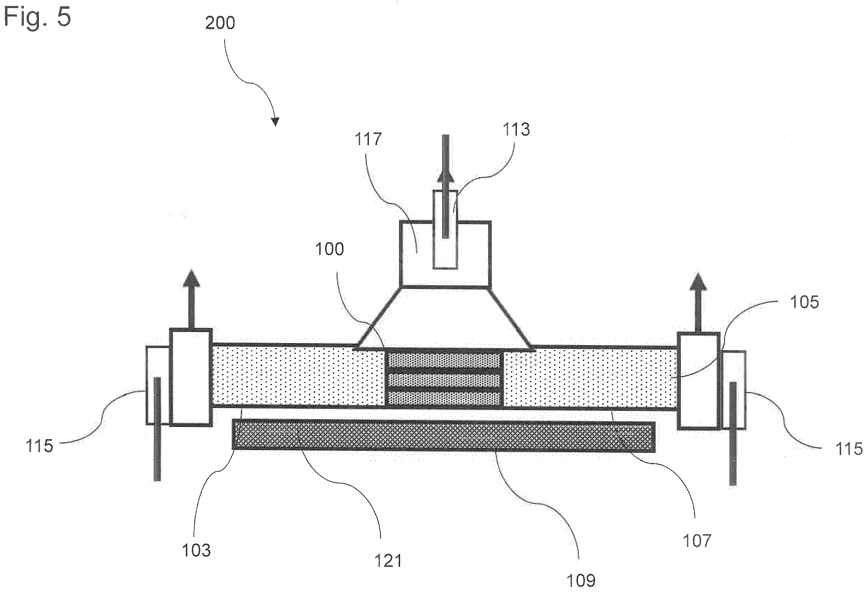

Fig. 5 zeigt das Herstellungsgerät 200 zum schichtweisen Herstellen des Objekts 100 in einem weiteren Verfahrensschritt. Die Wanne 105 mit dem Boden 103 und/oder die Bauplattform 117 mit dem Objekt 100 werden durch eine Bewegungsvorrichtung 115 zweiseitig und parallel zur Platte 109 angehoben, um einen Luftspalt 121 zwischen dem Boden 103 und der Platte 109 zu erzeugen. Der Aktor ist beispielsweise durch einen Linearmotor gebildet, der zum Trennen der Platte 109 vom Boden 103 elektrisch angesteuert wird. Die ausgehärtete Schicht 101-n+1 haftet dabei weiterhin am Boden 103 der Wanne 107 an.

Die Bewegungsvorrichtung 115 verschiebt den Boden 103 der Wanne 105, sodass der Luftspalt 121 zwischen dem Boden 103 und der Platte 109 erzeugt wird. Die Bauplattform 117 wird dabei gleichzeitig mittels der Abziehvorrichtung 113 nach oben bewegt.

Alternativ kann zur Erzeugung des Luftspalts 121 nur die Wanne 105 bzw. der Boden 103 von der Platte 109 getrennt werden. Darauf folgt das Abziehen der Schicht 101-1 oder 101-n+1 vom Boden 103 mittels der Bauplattform 117, die in diesem Fall als Abziehvorrichtung 113 dient. Die Bauplattform 117 wird durch einen separaten Aktor bewegt.

Diese Verschiebung kann in horizontaler und/oder vertikaler Richtung erfolgen. Im Allgemeinen wird eine Relativbewegung des Bodens 103 zum Supportfenster durch Abheben des Bodens 103 oder Absenken der Platte 109 durchgeführt. Bei einem Trennen des Bodens 103 relativ zur Platte 109 sollte eine vordefinierte Kraft nicht überschritten werden, bevor der Luftzutritt unterhalb des Bodens 103 gewährleistet ist.

Das Anheben der Wanne 105 oder das Absenken der Platte 109 kann mit einem oder mehreren Aktoren realisiert werden, die am Rahmen des Wanne 105 oder am Boden 103 angreifen. Der Abstand zwischen dem Boden 103 und der Platte 109 beträgt beispielsweise ca. 10 mm. Damit kann eine potenzielle Vorspannung des Bodens 103 gelöst werden und ein Luftspalt 121 von 1 mm - 5 mm zwischen dem Boden 103 und der Platte 109 erzeugt werden.

Durch die Bewegungsvorrichtung 115 wird der Boden 103 oder die Wanne 105 so bewegt, dass ein Luftspalt 121 zwischen dem Boden 103 und der Platte 109 erzeugt wird und sich der Boden 103 ungehindert elastisch deformieren oder wölben kann, um den Ablöseprozess des Objektes 100 zu erleichtern.

Die Bewegungsvorrichtung 115 bringt beispielsweise eine Kraft von ca. 50 N auf, um eine potenzielle Vorspannung den Bodens 103 von ca. 25 N und die Gewichtskraft der Wanne 105 von ca. 20 N zu überwinden. Die Bewegungsvorrichtung 115 kann kurz vor dem Ende der Belichtungszeit, d.h. 0 s - 1 s vor dem Ende der Belichtung, oder nach der Belichtung aktiviert werden, d.h. 0 s - 2 s nach der Belichtung. Die Bewegungsvorrichtung 115 benötigt beispielsweise 1 s - 3 s, um die Wanne 105 anzuheben.

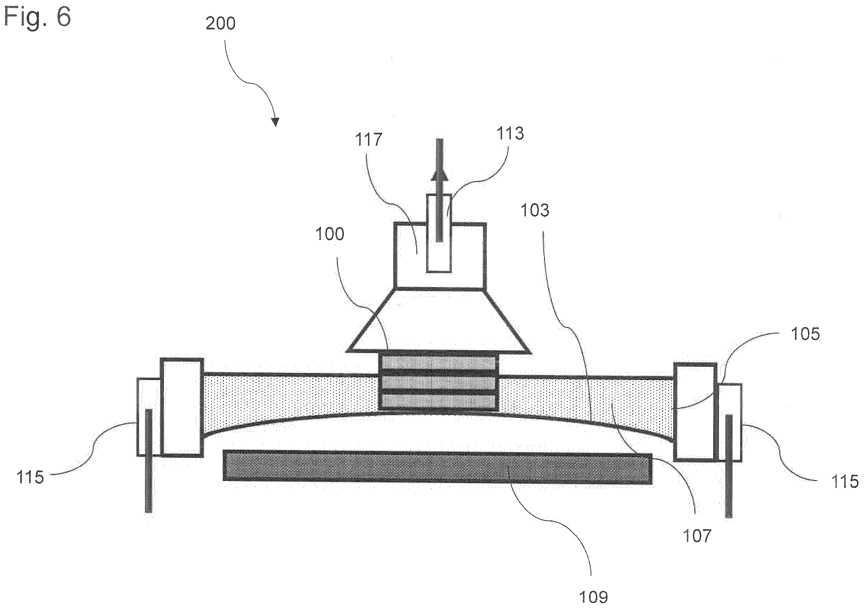

Fig. 6 zeigt das Herstellungsgerät 200 zum schichtweisen Herstellen des Objekts 100 in einem weiteren Verfahrensschritt. Vorteilhaft ist es, wenn bereits ein Luftspalt von 1 mm - 5 mm zwischen dem Boden 103 und der Platte 109 vorhanden ist, bevor die Bauplattform 117 mittels der Abziehvorrichtung 113 mit der anhaftenden Schicht oder den Schichten relativ zum Boden 103 nach oben fährt, um das Objekt 100 mit verringerten Abzugskräften vom elastisch verformbaren Boden 103 abzulösen oder abzuziehen.

Das Objekt 100 wird mittels einer Abziehvorrichtung 113 von dem Boden gelöst, die in diesem Fall durch die vertikal bewegliche Bauplattform 117 gebildet wird. Die Abziehvorrichtung 113 bewegt die Bauplattform 117 in vertikaler Richtung nach oben und ist beispielsweise ebenfalls durch einen steuerbaren Aktor gebildet. Die Funktion der Abziehvorrichtung 113 wird in diesem Fall durch die Bauplattform 117 ausgeübt. Im Allgemeinen kann die Abziehvorrichtung 113 auch auf andere Weise realisiert sein, beispielsweise durch die Bewegungsvorrichtung 115, die den Boden 103 nach unten bewegt.

Bei der Bewegung des Abziehens des Objektes 100 wölbt und/oder verformt sich der elastisch verformbare Boden 103 nach oben. Die Bauplattform 117 kann beispielsweise erst dann vom Boden 103 wegbewegt werden, wenn die Bewegungsvorrichtung 115 zum Anheben der Wanne 105 vollständig ausgefahren ist.

Die Bauplattform 117 fährt ca. 15 mm nach oben und zieht das Objekt 100 von der sich verformenden oder wölbenden Folie oder Membran des Bodens 103 mit einer Abzugskraft von ca. 30 N ab. Die Abzugskräfte können hierbei je nach belichteter Fläche variieren. Eine größere Fläche, an der das Objekt 100 am Boden 103 anhaftet, führt in der Regel zu höheren Abzugskräften, wie beispielsweise 150 N. Ebenso spielt die Positionierung des Objekts 100 auf der Bauplattform 117 eine Rolle. Typischerweise ist die Abzugskraft geringer, je näher das Objekte 100 am Rand des Belichtungsfeldes angeordnet ist. Auch das lichthärtbare Material 107 hat einen Einfluss auf die Abzugskraft, da nicht jedes Material gleich gut auf der Folie oder Membran haftet und das Einströmen des Materials in den Spalt von den spezifischen rheologischen Eigenschaften des Materials abhängig ist.

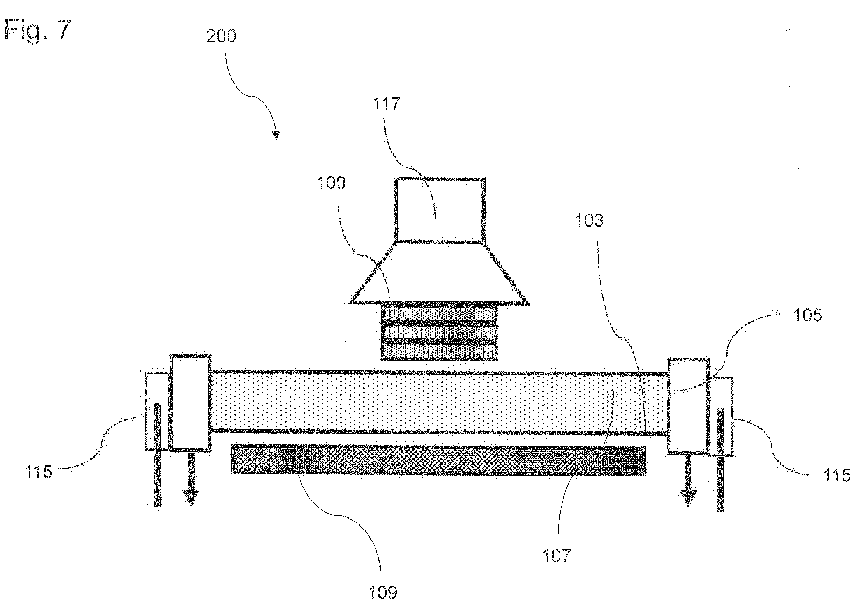

Fig. 7 zeigt das Herstellungsgerät 200 zum schichtweisen Herstellen des Objekts 100 in einem weiteren Verfahrensschritt. Die Position, bei der angenommen wird, dass sich das Objekt 100 vollständig abgelöst hat, wird in diesem Fall mit einem Sicherheitsabstand berechnet, um sicherzustellen, dass das Objekt 100 abgelöst ist, bevor die Geschwindigkeit weiter erhöht werden kann. Nach dem vollständigen Ablösen des Objekts 100 vom Boden 103 wird die Wanne 105 mittels der Bewegungsvorrichtung 115 wieder in Richtung der Platte 109 abgesenkt, bis der Boden 103 wieder die Platte 109 berührt. Dabei kann das Objekt 100 das Material 107 verlassen, muss es aber nicht.

Durch das aktive kontrollierte Absenken der Wanne 105 mit dem darin befindlichen Material 107, bevorzugt auf einer ungespannten Folie, so dass diese aufgrund der Schwerkraft des darin befindlichen Materials leicht bauchig durchhängt, kommt es zu einem Verdrängen der im Spalt befindlichen Luft vom Rand oder vom Zentrum ausgehend. Dadurch kann die Luft rückstandslos mit dem Vorteil entweichen, dass keine Abweichungen der Referenzebene vorliegen und so die Schichtdefinition durch Belichtung in der vorgesehenen Sollschichtdicke erfolgt.

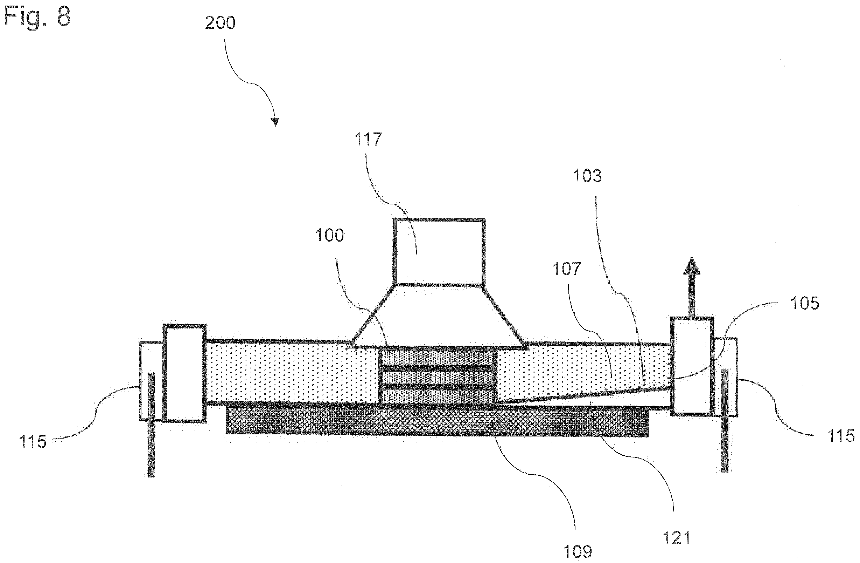

Fig. 8 zeigt das Herstellungsgerät 200 zum schichtweisen Herstellen des Objekts 100 in einem anderen Verfahrensschritt. Dieser Verfahrensschritt kann alternativ oder zusätzlich zum zweiseitigen räumlichen Trennen der Platte 109 durchgeführt werden und wird durch ein einseitiges Ankippen des Bodens 103 oder der Wanne 105 realisiert. Hierbei wird die Wanne 105 mit dem Boden 103 durch die Bewegungsvorrichtung 115 einseitig angehoben, so dass sich zunächst ein seitlicher Luftspalt 121 zwischen der Platte 109 und dem Boden 103 bildet.

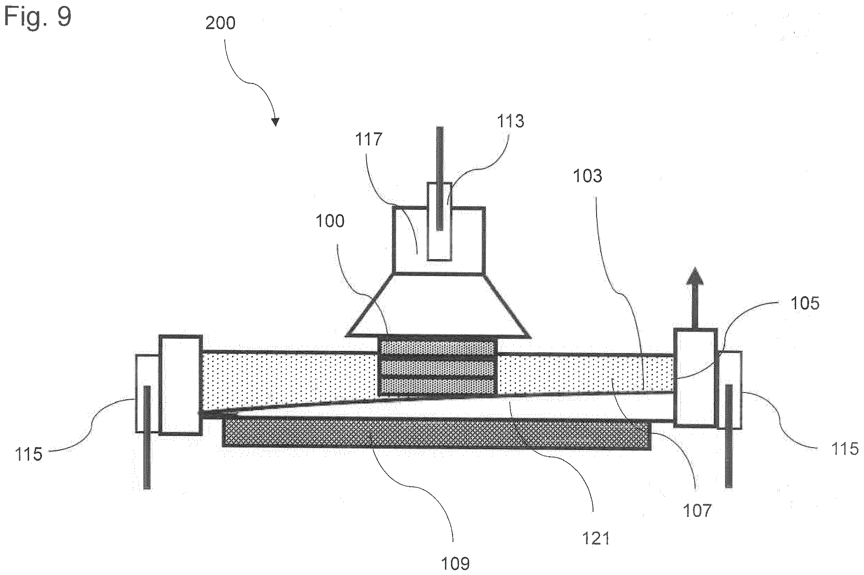

Fig. 9 zeigt das Herstellungsgerät 200 zum schichtweisen Herstellen des Objekts 100 in einem weiteren Verfahrensschritt. Mit zunehmendem Abstand zwischen dem elastisch verformbaren Boden 103 und der Platte 109 setzt sich der Luftspalt 121 über die gesamte Breite der Platte 109 fort. Dadurch wird die Trennung des Bodens 103 von der Platte 109 zusätzlich erleichtert.

Danach wird die Bauplattform 117 weiter in vertikaler Richtung bewegt, so dass das Objekt 100 von dem Boden 103 abgezogen wird. Die Abziehvorrichtung 113 ist auch hier durch die bewegliche Bauplattform gebildet.

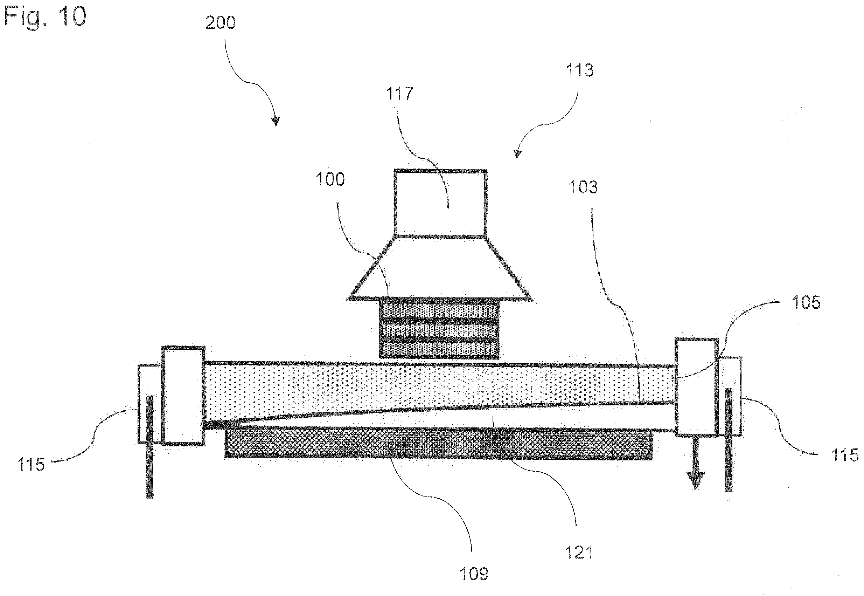

Fig. 10 zeigt das Herstellungsgerät 200 zum schichtweisen Herstellen des Objekts 100 in einem anderen Verfahrensschritt. Nach dem vollständigen Ablösen des Objekts 100 vom Boden 103 wie die Wanne 105 wieder einseitig in Richtung der Platte 109 abgesenkt, bis der Boden 103 wieder die Platte 109 berührt.

Neben einer Ablösebewegung in vertikaler Richtung kann im Allgemeinen gleichzeitig auch eine Bewegung in horizontaler Richtung, d.h. parallel zur Belichtungsebene, durchgeführt werden. Für das zusätzliche Verfahren in horizontaler Richtung wird ein zusätzlicher Aktor verwendet.

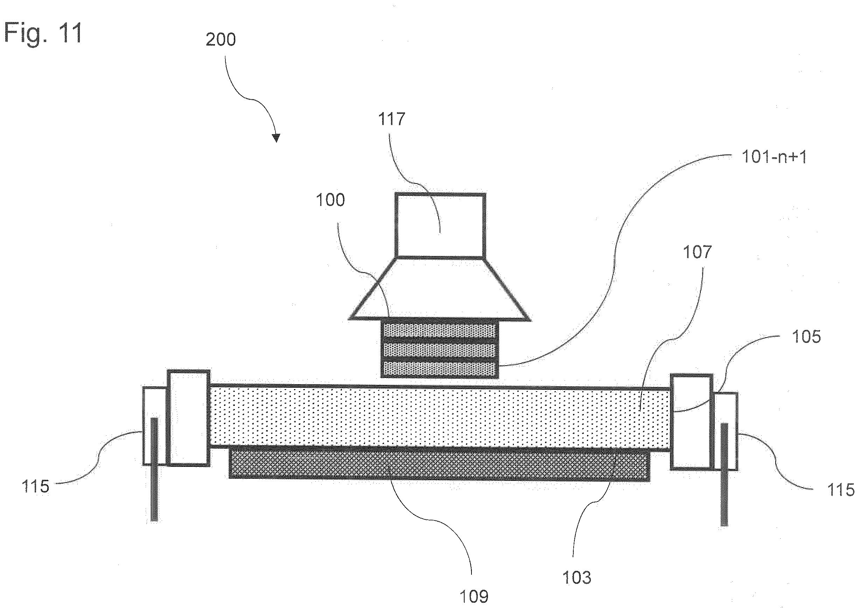

Fig. 11 zeigt das Herstellungsgerät 200 zum schichtweisen Herstellen des Objekts 100 in einem weiteren Verfahrensschritt. Die dritte Schicht 101-n+1 ist vollständig ausgehärtet und abgelöst. Die Wanne 105 mit dem elastisch verformbaren Boden 103 wird wieder planparallel zurückgestellt und die Bewegungsvorrichtung 115 fährt zurück in die Ausgangsposition. Der Zyklus beginnt von vorne. Durch das Verfahren werden die Abzugskräfte beim Ablösen des Objektes 100 von dem Boden 103 der Wanne 105 reduziert. Geringe Abzugskräfte haben zur Folge, dass der Ablöseprozess beschleunigt werden kann. Die Beschleunigung des Ablöseprozesses ist neben der geringeren Belastung der zu bauenden Objekte und/oder des elastisch verformbaren Bodens ein weiterer technischer Vorteil.

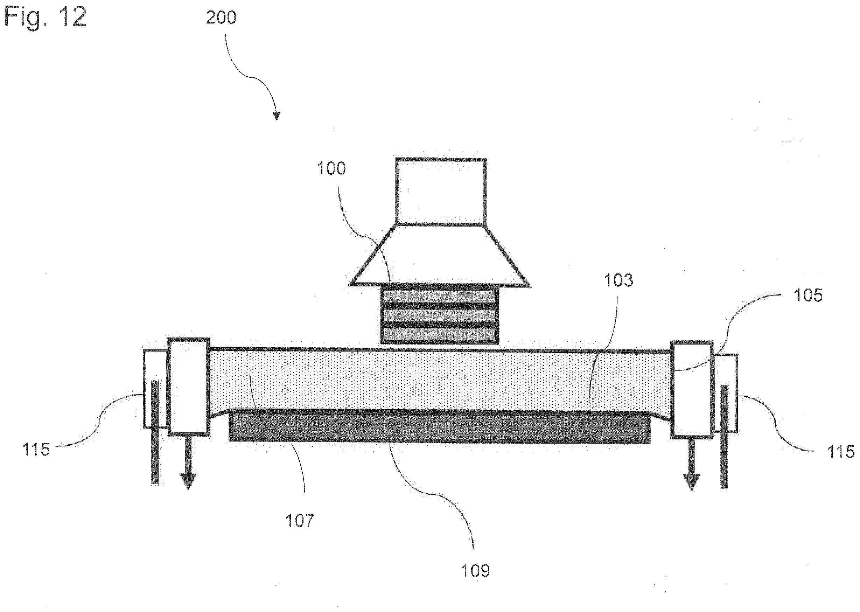

Fig. 12 zeigt das Herstellungsgerät 200 zum schichtweisen Herstellen des Objekts 100 in einem weiteren Verfahrensschritt. In diesem Fall wird mittels der Bewegungsvorrichtung 115 eine Spannung des elastisch verformbaren Bodens 103 erzeugt, indem die Bewegungsvorrichtung 115 die Wanne 105 nach unten verfährt. Die Bewegungsvorrichtung 115 dien in diesem Fall als Spannvorrichtung für den Boden 103. Dabei wird der elastisch verformbaren Boden 103 über die Platte 109 gespannt.

In diesem Fall kann der elastisch verformbare Boden 103 vorspannungsfrei in der Wanne 105 montiert werden, da dieser durch die Bewegungsvorrichtung 115 gespannt wird. Das Spannen des elastisch verformbaren Bodens 103 kann nach dem Ablöseprozess oder auch erst kurz vor der Belichtung der nächsten Schicht 101-n+1 erfolgen. Hierbei kann eine Kraft zwischen 1 N und 100 N aufgewendet werden.

Die Spannung des elastisch verformbaren Bodens 103 kann gleich nach dem Trennen der Schicht 101-n+1 durchgeführt werden oder wenn die Bauplattform 117 zurückfährt. Die Spannung des elastisch verformbaren Bodens 103 unterstützt auch das Zurückfließen des lichthärtbaren Materials 107.

Vorteilhaft ist es, den elastisch verformbaren Boden 103 möglichst bald nach dem Ablöseprozess wieder zu spannen, damit Luft unter dem Boden ausreichend Zeit hat, verdrängt zu werden und das Material 107 für die nächste Schicht 107 nachfließen kann. Auch kann die Bauplattform 117 oder das Objekt 100 im Zustellprozess zunächst in Kontakt mit dem gespannten Boden 103 gebracht werden, um das luftfreie Anlegen des Bodens 103 an die Platte 109 zu unterstützen.

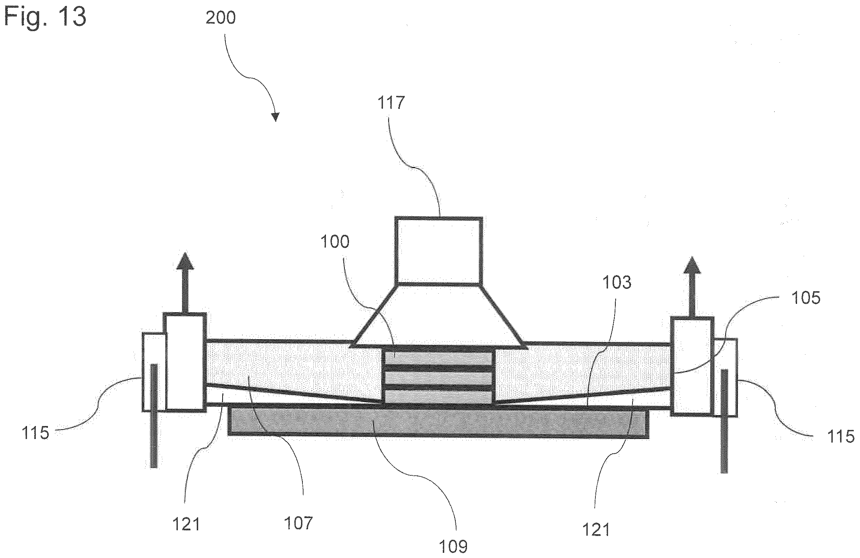

Fig. 13 zeigt das Herstellungsgerät 200 zum schichtweisen Herstellen des Objekts 100 in einem anderen Verfahrensschritt. In diesem Verfahrensschritt wird die Wanne 105 durch die Bewegungsvorrichtung 115 beidseitig angehoben, während sich der Boden 103 im Bereich des Objekts 100 in Kontakt mit der Platte befindet. Dadurch entsteht auf beiden Seiten des Objektes 100 zwischen dem Boden 103 und der Platte 121 ein Luftspalt 121.

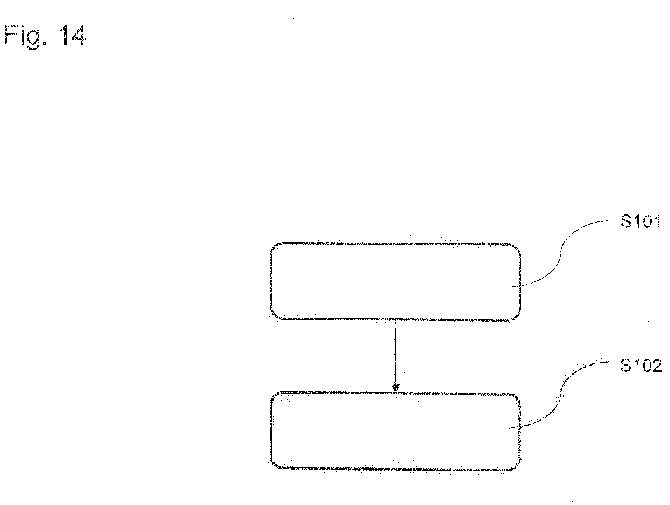

Fig. 14 zeigt ein Blockdiagramm eines Verfahrens zum schichtweisen Herstellen eines Objekts 100. In einem ersten Schritt S101 wird eine Schicht 101-1, ..., 101-n des Objekts 100 auf dem elastisch verformbaren Boden 103 der Wanne 105 ausgehärtet, in der sich das lichthärtbare Material 107 befindet. Im Schritt S102 wird die ausgehärtete Schicht 101-1, ..., 101-n von dem elastisch verformbaren Boden 103 abgezogen. Dabei verformt oder wölbt sich der der Boden 103. Durch den elastischen Abziehprozess lassen sie die Abzugskräfte verringern und sich das Verfahren zum Herstellen des Objekts beschleunigen.

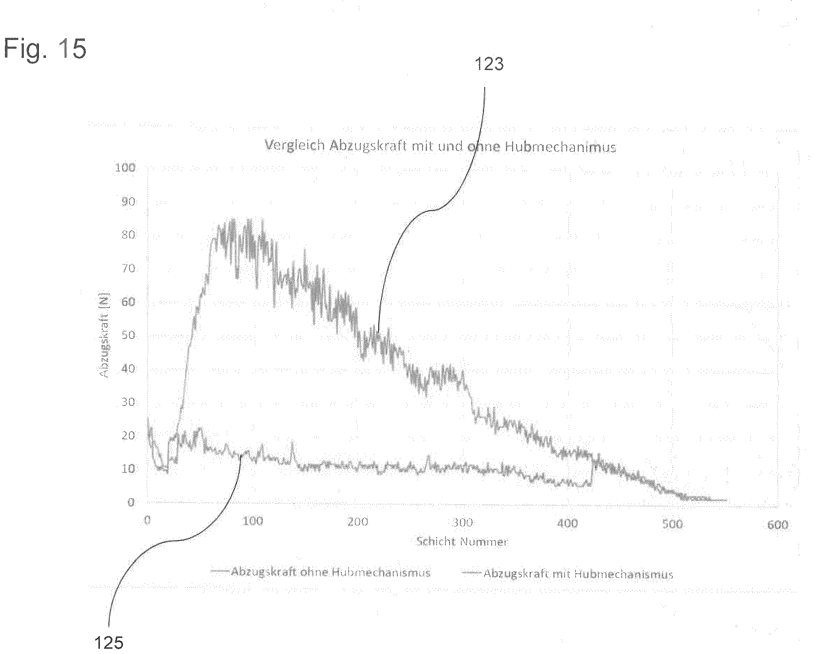

Fig. 15 zeigt einen Vergleich der Abzugskräfte mit und ohne den Hubmechanismus der Bewegungsvorrichtung 115. Der Verlauf 123 zeigt die Abzugskraft ohne Hubmechanismus des elastisch verformbaren Bodens 103. Der Verlauf 125 zeigt die Abzugskraft mit Hubmechanismus des elastisch verformbaren Bodens 103.

Die Bewegungsvorrichtung 115 verringert die Abzugskräfte des Objektes 100 von dem elastisch verformbaren Boden 103 von typischerweise von 30 N - 150 N auf ca. 30 N. Im Allgemeinen sind die Abzugskräfte, die auch größer als 200N sein können, von dem zu druckenden Material 107, von der Belichtungsfläche (je größer die Belichtungsfläche, desto höher die Abzugskräfte) und von der Position des oder der Objekte 100 im Belichtungsfeld (je zentraler im Belichtungsfeld angeordnet, desto höher die Abzugskräfte) abhängig.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Objekt
- 101: Schicht
- 103: Boden
- 105: Wanne
- 107: lichthärtbares Material
- 109: Platte
- 111: Aushärtevorrichtung
- 113: Abziehvorrichtung
- 115: Bewegungsvorrichtung
- 117: Bauplattform
- 119: Belichtungseinrichtung
- 121: Luftspalt
- 123: Verlauf
- 125: Verlauf

## Patentansprüche

1. Verfahren zum schichtweisen Herstellen eines Objekts (100), mit den Schritten:
- Aushärten (S101) einer Schicht (101-1, ..., 101-n) des Objekts (100) auf einem elastisch verformbaren Boden (103) einer Wanne (105), die ein lichthärtbares Material (107) umfasst; und
- Abziehen (S102) der ausgehärteten Schicht (101-1, ..., 101-n) von dem elastisch verformbaren Boden (103).

2. Verfahren nach Anspruch 1, wobei sich der Boden (103) beim Abziehen der ausgehärteten Schicht (101-1, ..., 101-n) elastisch verformt.

3. Verfahren nach einem der vorangehenden Ansprüche, wobei der elastisch verformbare Boden (103) während einem Aushärten der Schicht (101-1, ..., 101-n) auf einer Platte (109) aufliegt.

4. Verfahren nach Anspruch 3, wobei die Platte (109) durch eine Bewegungsvorrichtung (115) vor oder mit dem Abziehen der ausgehärteten Schicht vom elastisch verformbaren Boden (103) räumlich von dem Boden (103) getrennt wird.

5. Verfahren nach Anspruch 4, wobei der elastisch verformbare Boden (103) zum Trennen der Platte (109) einseitig und/oder zweiseitig gelöst wird.

6. Verfahren nach Anspruch 4 oder 5, wobei zum Abziehen die ausgehärtete Schicht (101-1, ..., 101-n) von dem elastisch verformbaren Boden (103) wegbewegt wird.

7. Verfahren nach Anspruch 6, wobei sich der elastisch verformbare Boden (103) beim Abziehen verformt oder wölbt.

8. Verfahren nach Anspruch 6 oder 7, wobei nach dem Abziehen der elastisch verformbare Boden (103) erneut mit der Platte (109) in Kontakt gebracht wird.

9. Verfahren nach einem der Ansprüche 6 bis 8, wobei der elastisch verformbare Boden (103) durch eine Bewegungsvorrichtung (115) abgesenkt wird.

10. Herstellungsgerät (200) zum schichtweisen Herstellen eines Objekts (100), mit:
- einer Aushärtevorrichtung (111) zum Aushärten einer Schicht (101-1, ..., 101-n) des Objekts (100) auf einem elastisch verformbaren Boden (103) einer Wanne (105) für ein lichthärtbares Material (105); und
- einer Abziehvorrichtung (113) zum Abziehen der ausgehärteten Schicht (101-1, ..., 101-n) von dem elastisch verformbaren Boden (103).

11. Herstellungsgerät (200) nach Anspruch 10, wobei der elastisch verformbare Boden (103) ausgebildet ist, sich beim Abziehen der ausgehärteten Schicht (101-1, ..., 101-n) elastisch zu verformen.

12. Herstellungsgerät (200) nach Anspruch 10 oder 11, wobei der elastisch verformbare Boden (103) ein Biegemodul zwischen 200 MPa und 2000 MPa aufweist.

13. Herstellungsgerät (200) nach einem der Ansprüche 10 bis 12, wobei das Herstellungsgerät (200) eine Platte (109) umfasst, auf die der elastische Boden (103) auflegbar ist.

14. Herstellungsgerät (200) nach einem der Ansprüche 10 bis 13, wobei das Herstellungsgerät (200) eine Bewegungsvorrichtung (115) zum einseitigen und/oder zweiseitigen Anheben und/oder Absenken des elastisch verformbaren Bodens (103) umfasst.

15. Herstellungsgerät (200) nach einem der Ansprüche 10 bis 14, wobei die Abziehvorrichtung (113) mit einer Bauplattform (117) zum Aufbauen des Objektes (100) gekoppelt ist.

16. Herstellungssystem (300) mit einem Herstellungsgerät (200) nach einem der Ansprüche 10 bis 15 und einem lichthärtbaren Material (107), das nach dem Aushärten einer Schicht (101-1, ..., 101-n) des Objekts (100) auf dem elastisch verformbaren Boden (103) der Wanne (105) anhaftet.
